# EUROPÄISCHE PATENTSCHRIFT

(11) **EP 1 315 921 B1**
(45) Veröffentlichungstag und Bekanntmachung des Hinweises auf die Patenterteilung: **22.09.2004**
(21) Anmeldenummer: 01951699.6
(22) Anmeldetag: 21.07.2001
(51) Int. Cl.: F16H 45/00, F16H 45/02, F16D 33/00

(54) **ANFAHREINHEIT**
STARTER UNIT
UNITE DE DEMARRAGE

(30) Priorität: 08.09.2000 DE 10044722; 12.09.2000 DE 10045337
(43) Veröffentlichungstag der Anmeldung: 04.06.2003
(73) Patentinhaber: Voith Turbo GmbH & Co. KG, 89522 Heidenheim (DE)
(72) Erfinder: BECKE, Martin, 89075 Ulm (DE); NITSCHE, Martin, 89547 Gerstetten (DE)
(74) Vertreter: Dr. Weitzel & Partner
(86) Internationale Anmeldenummer: PCT/EP2001/008447
(87) Internationale Veröffentlichungsnummer: WO 2002/021020

(56) Entgegenhaltungen:
- DE-A- 19 650 339
- FR-A- 2 436 284
- FR-A- 2 595 075
- FR-E- 70 765
- GB-A- 2 193 766

## Beschreibung

Die Erfindung betrifft ein automatisiertes Schaltgetriebe und ein Fahrzeug mit einem Schaltgetriebe.

Getriebe für den Einsatz in Fahrzeugen, insbesondere Nutzkraftwagen in Form von Schaltgetrieben oder automatisierten Schaltgetrieben sind in einer Vielzahl von unterschiedlichen Ausführungen bekannt. Diesen gemeinsam ist in der Regel, daß der Anfahrvorgang über eine Kupplungseinrichtung in Form einer Reibkupplung oder eines hydrodynamischen Wandlers realisiert wird. Problematisch gestaltet sich die Verwendung einer Reibungskupplung als Anfahrelement jedoch in den Funktionszuständen, welche durch einen erhöhten Schlupf über einen längeren Zeitraum gekennzeichnet sind. Dies gilt insbesondere für den Anfahrvorgang. Aufgrund der enormen thermischen Beanspruchung ist die Kupplungseinrichtung dann einem erhöhten Verschleiß unterworfen. Um diesen möglichst gering zu halten, sind entsprechende Anforderungen an den zu verwendenden Reibbelag zu stellen. Des weiteren bedingen die Verschleißerscheinungen geringe Standzeiten für das Anfahrelement.

Der Nachteil von Lösungen mit Anfahrelementen in Form von hydrodynamischen Wandlern besteht im wesentlichen in den hohen Kosten für den hydrodynamischen Teil und dem Erfordernis des Vorsehens einer Trennkupplung.

Eine Ausführung einer gattungsgemäßen Getriebebaueinheit mit einem Anfahrelement in Form einer Turbokupplung ist aus der Druckschrift DE 196 50 339 A1 bekannt.

Mit dieser werden mindestens zwei Betriebszustände - ein erster Betriebszustand zur Leistungsübertragung in wenigstens einer Schaltstufe und ein zweiter Betriebszustand zur Abbremsung - realisiert. Dabei werden beide Funktionen über die hydrodynamische Kupplung realisiert. Diese umfaßt ein Pumpenrad und ein Turbinenrad, welche miteinander einen torusförmigen Arbeitsraum bilden. Die Realisierung der Funktion eines hydrodynamischen Retarders erfolgt durch Zuordnung der Funktion des Statorschaufelrades, entweder durch Festsetzung gegenüber einem ruhenden Getriebeteil zum Pumpenrad und der Funktion des Rotorschaufelrades zum Turbinenrad oder der Zuordnung der Funktion des Statorschaufelrades zum Turbinenrad durch Festsetzen des Turbinenrades gegenüber den ruhenden Getriebeteilen und der Funktion des Rotorschaufelrades zum Pumpenrad. Das die Funktion des Rotorschaufelrades übernehmende Schaufelrad ist in beiden Fällen mit der Getriebeausgangswelle über den mechanischen Getriebeteil gekoppelt. Die Anbindung der Turbokupplung an die Antriebswelle bzw. den mechanischen Getriebeteil der Getriebebaueinheit erfolgt dabei derart, daß zur Realisierung des ersten Betriebszustandes das Turbinenrad mit dem mechanischen Getriebeteil und das Pumpenrad mit der Getriebeeingangswelle verbindbar ist, während zur Realisierung der zweiten Betriebsweise, d.h. Abbremsung, eines der beiden Schaufelräder festgesetzt wird. Zu diesem Zweck sind der hydrodynamischen Kupplung, insbesondere einem Schaufelrad Mittel zur Festsetzung und Entkopplung vom Antriebsstrang zugeordnet. Diese Ausführung erlaubt zwar die Gestaltung einer besonders kompakten Getriebebaueinheit, da auf ein separates Bremselement verzichtet werden kann. Ein Nachteil dieser Ausführung besteht jedoch darin, daß diese Ausführung für automatische Schaltgetriebe konzipiert ist, bei welchen während des Schaltvorganges Motor oder Turbine eine starke Drehzahländerung erfahren, wobei die Drehzahl des Turbinenrades synchronisiert werden muß. Bei Anwendung in automatisierten Schaltgetrieben ist es jedoch zur Gewährleistung einer sicheren Unterbrechung des Leistungsflusses bei Schaltvorgängen erforderlich, eine separate Trennkupplung vorzusehen.

Der Erfindung liegt daher die Aufgabe zugrunde, eine Anfahreinheit für den Einsatz in Schaltgetriebe-Baueinheiten, insbesondere mit Eignung für den Einsatz in automatisierten Schaltgetrieben in Antriebssystemen derart weiterzuentwickeln, daß die genannten Nachteile vermieden werden. Im einzelnen ist dabei auf die Realisierung eines möglichst verschleißfreien Anfahrvorganges unabhängig von der Zeitdauer des Zustandes erhöhten Schlupfes zu achten. Die Anfahreinheit selbst sollte dabei durch einen geringen konstruktiven und steuerungstechnischen Aufwand charakterisierbar und leicht in das Antriebssystem bzw. in eine Kraftübertragungseinheit, beispielsweise in Form einer Getriebebaueinheit integrierbar sein, wobei den zunehmend erhöhten Anforderungen an eine geringe Baulänge Rechnung getragen werden sollte. Ein weiterer Aspekt der Erfindung besteht darin, eine sichere Gewährleistung der Unterbrechung des Leistungsflusses während des Schaltvorganges zu ermöglichen.

Die erfindungsgemäße Lösung ist durch die Merkmale der Ansprüche 1 und 8 charakterisiert. Vorteilhafte Ausgestaltungen sind in den Unteransprüchen wiedergegeben.

Erfindungsgemäß umfaßt eine Multifunktionseinheit, insbesondere Anfahreinheit, ein Anfahrelement in Form eines hydrodynamischen Bauelementes mit mindestens einem Primärschaufelrad und einem Sekundärschaufelrad, d.h. in Form einer hydrodynamischen Kupplung oder eines hydrodynamischen Drehzahl-/Drehmomentenwandlers. Die Anfahreinheit umfaßt einen Eingang und einen Ausgang. Das Anfahrelement, d.h. das hydrodynamische Bauelement weist eine An- und eine Abtriebsseite auf. Die Abtriebsseite des Anfahrelementes, d.h. der hydrodynamischen Kupplung, ist mit dem Ausgang der Multifunktions- bzw. Anfahreinheit verbunden. Erfindungsgemäß ist zwischen dem Sekundärschaufelrad - bei Ausführung als hydrodynamische Kupplung und als Wandler dem Turbinenrad -, d.h. dem Abtrieb des Anfahrelementes und dem Ausgang des Anfahrelementes ein Freilauf vorgesehen. Der Freilauf ermöglicht als richtungsgeschaltete Kupplung im wesentlichen die zwei folgenden Funktionszustände:
1. Ist die Drehzahl auf der Antriebsseite des Anfahrelementes, d. h. dem Turbinenrad gleich der am Ausgang der Multifunktionseinheit wird ein Moment vom Turbinenrad auf den Ausgang der Multifunktionseinheit übertragen.
2. Ist die Drehzahl des Turbinenrades, d. h. des Abtriebes des Anfahrelementes geringer als am Ausgang der Anfahreinheit wird über das Turbinenrad kein Moment auf den Ausgang übertragen, das Turbinenrad läuft frei.

Die erfindungsgemäße Lösung bietet neben der Realisierung eines nahezu verschleißfreien Anfahrvorganges den Vorteil, daß während des Schaltvorganges das hydrodynamische Bauelement nicht entleert werden muß und auch keine zusätzliche Trennkupplung zur Leistungsunterbrechung erforderlich ist. Die Abkoppelung des Einganges, welcher in der Regel die Getriebeeingangswelle bildet, von den nachgeordneten Schaltstufen erfolgt allein über den Freilauf und sichert somit die Funktion der Synchroneinrichtung im Schaltgetriebe.

Unter einem weiteren Aspekt der Erfindung umfaßt die Anfahreinheit neben dem Anfahrelement in Form einer hydrodynamischen Kupplung eine Überbrückungskupplung, wobei beide parallel zueinander geschaltet sind, jedoch nur während zeitlich geringer oder definierter Phasen gemeinsam im Eingriff sind, wobei der Leistungsfluß zwischen dem Eingang und dem Ausgang der Anfahreinheit unterbrechbar ist. Diese Unterbrechbarkeit kann dabei beim Einsatz der Anfahreinheit in automatisierten Schaltgetrieben mit der Anfahreinheit nachgeordnetem mechanischem Getriebeteil durch die Schaltbarkeit der Überbrückungskupplung bei gleichzeitiger Entleerung bzw. bereits geleerter hydrodynamischer Kupplung oder beim Einsatz in automatisierten Schaltgetrieben mit mechanischem Getriebeteil oder Nach- bzw. Gruppenschaltsatz beim Umschalten zwischen den ersten beiden unteren Gangstufen durch die Entleerung der hydrodynamischen Kupplung erfolgen. Vorzugsweise werden bei einer derartigen Ausführung die Abtriebsseiten der hydrodynamischen Kupplung und der Überbrückungskupplung drehfest miteinander über den Freilauf gekoppelt. Der Vorteil dieser Anordnung besteht im wesentlichen darin, daß nur zwei Zustände bezüglich der Leistungsübertragung vom Eingang des Multifunktionselementes bis zum Ausgang unterschieden werden müssen, wobei die Leistungsübertragung entweder rein mechanisch über die Überbrückungskupplung oder hydrodynamisch über das hydrodynamische Bauelement erfolgt. Durch die geeignete Ansteuerung können dabei die Vorteile der hydrodynamischen Leistungsübertragung für bestimmte Fahrzustände optimal genutzt werden. Dies gilt insbesondere für den Anfahrvorgang, welcher vollständig verschleißfrei erfolgen kann, wobei in allen anderen Fahrzuständen eine vollständige Überbrückung der schlupfbehafteten hydrodynamischen Kupplung realisiert wird. Ab einem bestimmten Schlupfzustand, welcher abhängig von der Auslegung der hydrodynamischen Kupplung ist, erfolgt die Überbrückung durch eine Kopplung zwischen dem Pumpen- und dem Turbinenrad mittels mechanischer Überbrückungskupplung. Die Antriebsleistung wird von einer mit der Multifunktionseinheit, insbesondere dem Eingang koppelbaren Antriebsmaschine mit nur geringen Verlusten, bedingt durch die mechanischen Übertragungssysteme und die notwendige Hilfsenergie, auf den Ausgang übertragen. Da für den Einsatz in Schaltgetrieben, insbesondere synchronisierten Schaltgetrieben beim Wechsel zwischen zwei Gangstufen die Verbindung zwischen der Antriebsmaschine und dem Abtrieb in der Regel getrennt werden sollte, wird diese Aufgabe der Überbrückungskupplung zugeordnet. In Analogie gilt diese Aussage auch für die Ausführung des Anfahrelementes als hydrodynamischer Drehzahl-/Drehmomentenwandler.

Die drehfeste Verbindung zwischen den Abtriebsseiten des hydrodynamischen Bauelementes, insbesondere der hydrodynamischen Kupplung odes des hydrodynamischen Wandlers hinter dem Freilauf und der Überbrückungskupplung kann dabei lösbar oder unlösbar bezüglich der Montage erfolgen. Die Verbindung selbst kann im erstgenannten Fall form- und/oder kraftschlüssig erfolgen. Im zweiten Fall kann die Verbindung beispielsweise durch Stoffschluß oder durch Ausführung als integrale Baueinheit von Turbinenrad der Turbokupplung und Abtrieb der Überbrückungskupplung - bei Ausführung als mechanische Kupplung in Lamellenbauweise in Form der Kupplungsausgangsscheibe der Überbrückungskupplung - realisiert werden. Die konkrete Auswahl der Verbindungsart erfolgt entsprechend den Erfordernissen des Einsatzfalles.

Die Überbrückungskupplung ist als mechanische Reibkupplung, vorzugsweise in Lamellenbauart und vorzugsweise naß laufend ausgeführt.

Vorzugsweise erfolgt die Integration der Komponenten hydrodynamische Kupplung, Überbrückungskupplung sowie des Freilaufes in einem gemeinsamen Gehäuse, wobei die Überbrückungskupplung vorzugsweise im Betriebsmittel der hydrodynamischen Kupplung oder des hydrodynamischen Wandlers mit umläuft. Das gemeinsam nutzbare Gehäuse kann dabei
1. vom Gehäuse des hydrodynamischen Bauelementes, insbesondere der hydrodynamischen Kupplung oder des hydrodynamischen Wandlers oder
2. einem separaten Gehäuse oder
3. dem Gehäuse von Anschlußelementen, beispielsweise einer Antriebsmaschine oder des Getriebes gebildet werden.

Denkbar ist im letzten Fall beispielsweise die Ausbildung des Gehäuses entweder allein von der mit der Anfahreinheit koppelbaren Antriebsmaschine oder der mit der Anfahreinheit koppelbaren Getriebebaueinheit oder von beiden an die Anfahreinheit anschließenden Elementen.

Die erfindungsgemäß gestaltete Anfahreinheit baut sehr klein und hat somit bei Integration in einer Getriebebaueinheit, insbesondere einem automatisierten Schaltgetriebe nur geringen Einfluß auf die Baulänge. Die bauliche Einheit aus hydrodynamischer Kupplung oder Wandler, Überbrückungskupplung und Freilauf kann als modulare Baueinheit vormontiert im Handel angeboten und geliefert werden. Die Integration in einer Anschlußeinheit erfolgt dann kraftschlüssig und/oder formschlüssig, beispielsweise durch Aufstecken der modularen Baueinheit auf eine Eingangswelle des Anschlußelementes, insbesondere einer Getriebebaueinheit oder die Realisierung einer Welle-Nabe-Verbindung zwischen dem Ausgang der Anfahreinheit und dem Eingang der Anschlußeinheit, wobei die Eingangswelle der Anschlußeinheit gleichzeitig die Ausgangswelle der Anfahreinheit im montierten Zustand bilden kann.

Bei Ausführung der Überbrückungskupplung als mechanische Kupplung in Scheibenbauweise in Form einer nassen Lamellenkupplung bestehen zur Realisierung des Naßlaufes der Lamellen eine Vielzahl von Möglichkeiten. Vorzugsweise wird dies auf einfache Art und Weise dadurch realisiert, daß das sich außerhalb des Arbeitsraumes der hydrodynamischen Kupplung befindliche Betriebsmittel gleichzeitig als Schmiermittel für die Überbrückungskupplung genutzt wird. Dabei handelt es sich in der Regel um das im Betriebsmittelsumpf des Kupplungsgehäuses oder in einer Kupplungsschale oder Speicherkammer angesammelte Betriebsmittel. In diesem Fall können zusätzliche Abdichtmaßnahmen zwischen der hydrodynamischen Kupplung und der Überbrückungskupplung entfallen und die Überbrückungskupplung auf einfache Weise im Gehäuse der hydrodynamischen Kupplung integriert werden. Diese Ausführung ermöglicht eine hinsichtlich Aufbau und Funktionalität besonders kompakte Bauform einer verschleißfreien Anfahreinheit. Diese Ausführungen sind auch auf den Wandler übertragbar.

Unter einem weiteren Aspekt der Erfindung besteht die Möglichkeit, durch Zuordnung einer Einrichtung zum wahlweisen Festhalten des Turbinenrades, die hydrodynamische Kupplung gleichzeitig als vollwertigen hydrodynamischen Retarder zu betreiben und damit eine verschleißfreie Bremseinrichtung zu ermöglichen. Eine separate hydrodynamische Bremseinrichtung, weiche insbesondere beim Einsatz in Nutzkraftwagen Verwendung findet, kann entfallen. Die Ventilationsverluste des Retarders sind im Vergleich zum konventionellen Retarder sehr gering. Die Einrichtung zum Festhalten bzw. zur Ankupplung des Turbinenrades am Gehäuse ist im einfachsten Fall als Bremseinrichtung, vorzugsweise in Scheibenbauweise ausgeführt. Diese wird am Abtrieb der hydrodynamischen Kupplung, d.h. am Turbinenrad wirksam. Die Anbindung des Bremselementes am Turbinenrad erfolgt zwischen Turbinenrad und Freilauf. Bei eingelegtem Gang und geschlossenem Bremselement kann in besonders vorteilhafter Weise ein Zurückrollen des Fahrzeuges an Steigungen vermieden werden.

Bezüglich der räumlichen Anordnung der einzelnen Komponenten der hydrodynamischen Kupplung in axialer Richtung vom Eingang der Multifunktionseinheit zum Ausgang der Multifunktionseinheit betrachtet bestehen im wesentlichen die zwei nachfolgend genannten Möglichkeiten:
1. Anordnung des Pumpenrades der hydrodynamischen Kupplung zwischen der Überbrückungskupplung und dem Turbinenrad der hydrodynamischen Kupplung
2. Anordnung des Turbinenrades der hydrodynamischen Kupplung zwischen der Überbrückungskupplung und dem Pumpenrad der hydrodynamischen Kupplung

Unter einem weiteren Aspekt der Erfindung besteht die Möglichkeit, als zusätzliche Komponente in der Anfahreinheit eine Einrichtung zur Schwingungsdämpfung, insbesondere einen Torsionsschwingungsdämpfer in diese zu integrieren. Der Torsionsschwingungsdämpfer ist funktional entweder der Antriebsseite, wobei diese Ausführung besonders vorteilhaft ist, oder der Abtriebsseite zuordenbar, wobei bezüglich der räumlichen Anordnung zwischen der Anordnung des Torsionsschwingungsdämpfers in Einbaulage betrachtet
a) räumlich vor der hydrodynamischen Kupplung und vor der Überbrückungskupplung oder
b) räumlich vor der hydrodynamischen Kupplung und hinter der Überbrückungskupplung oder
c) räumlich hinter der hydrodynamischen Kupplung
unterschieden werden kann.

Die Kombination einer hydrodynamischen Kupplung oder eines hydrodynamischen Wandlers, einer Überbrückungskupplung sowie eventuell zusätzlich eines Torsionsschwingungsdämpfers und die Integration in einer modularen Baueinheit bildet die Möglichkeit der Schaffung einer multifunktionalen Antriebskomponente mit geringem Bauraumbedarf. Diese Elemente können dabei in einem gemeinsamen Gehäuse integriert sein, wobei in diesem Fall die modulare Baueinheit als selbständig handelbare Baueinheit anbietbar ist. Als gemeinsames Gehäuse kann dabei das Gehäuse der hydrodynamischen Kupplung verwendet werden.

Die erfindungsgemäße Lösung wird nachfolgend anhand von Figuren erläutert. Darin ist im einzelnen folgendes dargestellt:
- Figur 1: verdeutlicht in schematisch stark vereinfachter Darstellung eine Ausführungsform der erfindungsgemäßen Lösung einer Multifunktionseinheit, insbesondere Anfahreinheit mit Anfahrelement in Form einer hydrodynamischen Kupplung und Überbrückungskupplung sowie Freilauf;
- Figur 2: verdeutlicht in schematisch stark vereinfachter Darstellung eine funktionale Weiterentwicklung einer Ausführung gemäß Figur 1 mit Eignung des Anfahrelementes zur Drehmomentenübertragung oder Erzeugung eines Bremsmomentes;
- Figuren 3a und 3b: verdeutlichen für Ausführungen gemäß Figur 1 und Figur 2 Ausführungsformen zur räumlichen Anordnung der einzelnen Elemente des hydrodynamischen Bauelementes;
- Figur 4: verdeutlicht anhand einer Tabelle beispielhaft die einzelnen Funktionszustände der Anfahreinheiten gemäß Figur 1 bis 3;
- Figuren 5a und 5b: verdeutlicht Konfigurationen gemäß der Figuren 1 und 2 mit Ausgestaltung des Anfahrelementes als hydrodynamischer Wandler;
- Figuren 6a und 6b: verdeutlichen beispielhaft Weiterentwicklungen von Anfahreinheiten gemäß Figur 1 und 2 mit zusätzlichem Torsionsschwingungsdämpfer;

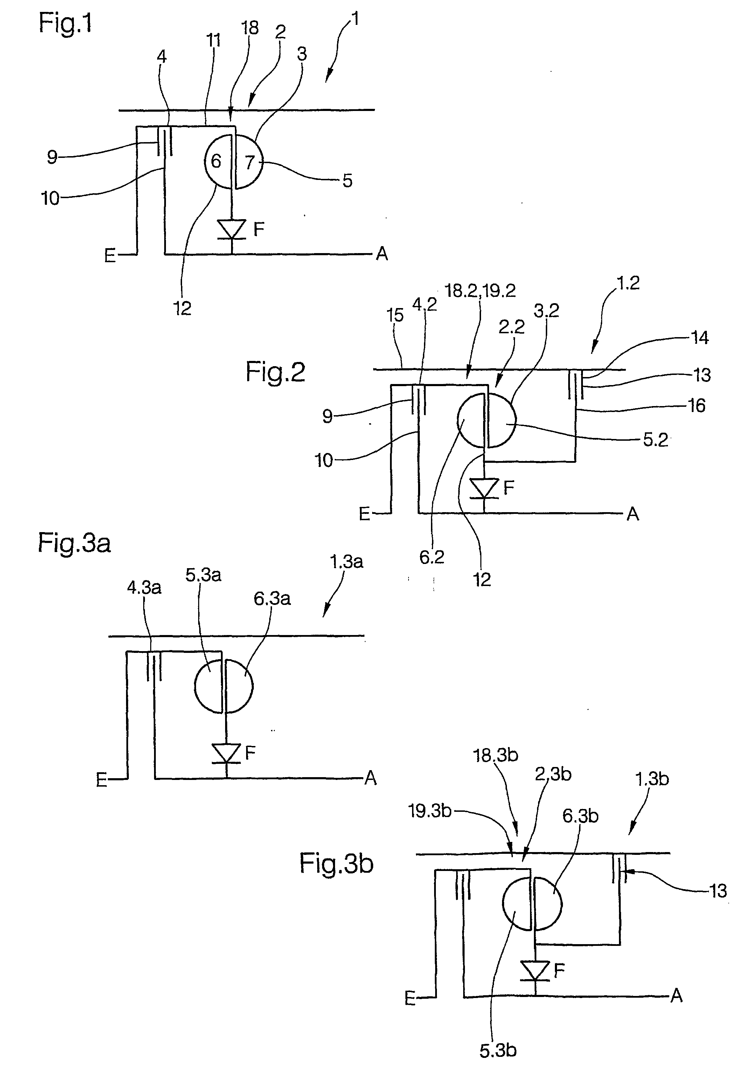

Die Figur 1 verdeutlicht in schematisch vereinfachter Darstellung den Grundaufbau einer erfindungsgemäß gestalteten Anfahreinheit 1, umfassend ein Anfahrelement 2. Die Anfahreinheit 1 umfaßt ein hydrodynamisches Bauelement 18 in Form einer hydrodynamischen Kupplung 3 und eine Überbrückungskupplung 4. Die hydrodynamische Kupplung 3 und die Überbrückungskupplung 4 sind parallel geschaltet. Die hydrodynamische Kupplung 3 umfaßt wenigstens ein als Pumpenrad 5 fungierendes Primärrad und ein als Turbinenrad 6 fungierendes Sekundärrad, welche miteinander einen torusförmigen Arbeitsraum 7 bilden. Die Überbrückungskupplung 4 kann vielgestaltig ausgeführt sein, vorzugsweise in Form einer Scheiben- insbesondere Lamellenkupplung. Diese umfaßt eine Kupplungseingangsscheibe 9 und eine Kupplungsausgangsscheibe 10, welche wenigstens mittelbar reibschlüssig miteinander in Wirkverbindung bringbar sind, das heißt entweder direkt oder über weitere scheibenförmige Zwischenelemente, die Reibpaarungen miteinander bilden. Die Anfahreinheit 1 umfaßt des weiteren einen, mit einer hier nicht dargestellten Antriebsmaschine wenigstens mittelbar koppelbaren Antrieb beziehungsweise Eingang E und einen mit dem Abtrieb im Antriebssystem wenigstens mittelbar koppelbaren Abtrieb, welcher auch als Ausgang A bezeichnet wird. Die Bezeichnungen Eingang und Ausgang beziehen sich dabei auf die Kraftflußrichtung im Traktionsbetrieb von der Antriebsmaschine zum Abtrieb betrachtet. Der Eingang E und der Ausgang A sind beispielsweise in Form von Voll- oder Hohlwellen ausgeführt, die jeweils mit den entsprechenden Anschlußelementen - Antriebsmaschine oder Schaltstufen - in bekannter Weise koppelbar sind. Eine andere bekannte Kopplung zwischen Eingang und Pumpenrad erfolgt über in Umfangsrichtung drehsteife und in axialer Richtung biegeweicher Flexplates. Die hydrodynamische Kupplung 3 als Anfahrelement 2 umfaßt in dieser Kraftflußrichtung betrachtet ebenfalls einen Antrieb 11 und einen Abtrieb 12. Der Antrieb 11 wird dabei vom Pumpenrad 5 beziehungsweise einem mit diesem drehfest gekoppelten Element gebildet, während der Abtrieb 12 vom Turbinenrad 6 gebildet wird. Dabei sind die Kupplungsausgangsscheibe 10 sowie der Abtrieb 12 mit dem Ausgang A der Anfahreinheit 1 verbindbar. Erfindungsgemäß ist, jedoch zwischen dem Turbinenrad 6 bzw. dem Abtrieb 12 der hydrodynamischen Kupplung 3 und dem Ausgang A ein Freilauf F vorgesehen. Damit wird eine Anfahreinheit 1 geschaffen, welche neben dem Anfahrvorgang auch bei Kuppelvorgängen beim Einsatz in Schaltgetrieben positive Effekte erzielt. Insbesondere während des Gangstufenwechsels kann übermäßiger Verschleiß in den Synchronisiereinrichtungen vermindert werden und somit der Komfort erhalten beziehungsweise verbessert werden.

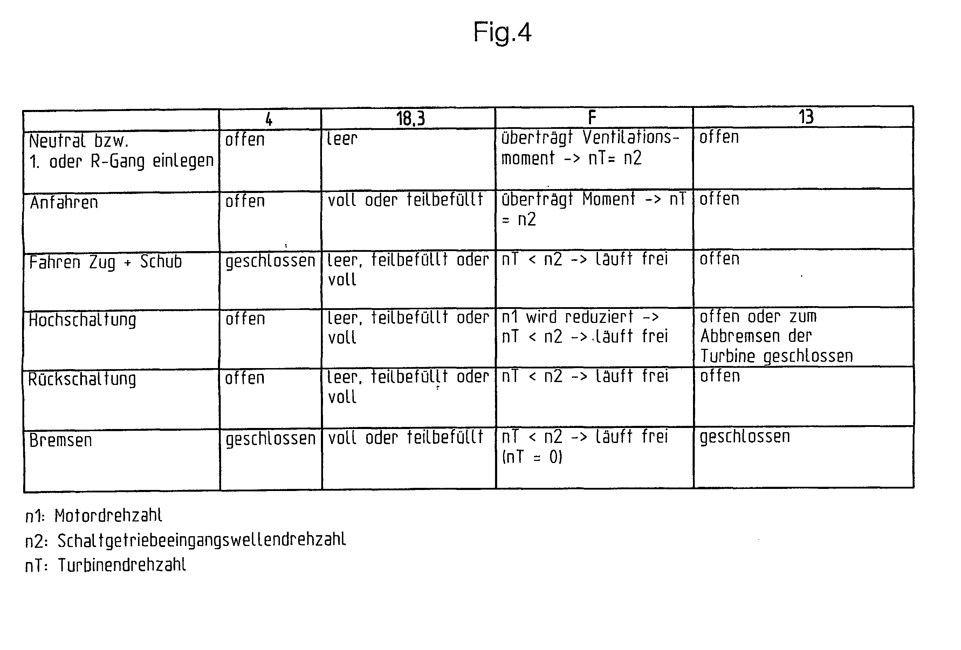

Bezüglich der einzelnen Funktionszustände wird auf die Tabelle in Figur 4 verwiesen. Diese verdeutlicht beispielhaft die einzelnen Funktionszustände von Überbrückungskupplung 4, hydrodynamischer Kupplung 3, dem Freilauf F und bei einer Ausführung gemäß Figur 2 der zusätzlichen Bremseinrichtung 13.

Die erfindungsgemäße Anfahreinheit 1 ist in der Regel in einem Antriebsstrang mit einem Drehzahl- oder Drehmomentumformer, das heißt einem Getriebe gekoppelt bzw. bildet mit entsprechenden Schaltstufen eine Getriebebaueinheit. Vorzugsweise ist die Anfahreinheit 1 Bestandteil einer Getriebebaueinheit, so daß der Ausgang A mit dem Eingang weiterer Drehzahl-/Drehmomentumformungseinheiten gekoppelt ist. Diese werden bei automatisierten Schaltgetrieben in der Regel aus mechanischen Übersetzungsstufen gebildet. Das Gesamtgetriebe aus Anfahreinheit 1 und nachgeordneten Drehzahl-/Drehmomentumformungseinheiten weist dabei als Eingangswelle den Eingang E der Anfahreinheit auf. Um einen Gangstufenwechsel in einer Schaltgetriebebaueinheit vornehmen zu können, muß die Getriebeeingangswelle, welche von dem Eingang E der Anfahreinheit 1 gebildet wird, momentenfrei sein und von zusätzlichen Massen entkoppelt werden. Andernfalls besteht die Gefahr, daß die Synchronelemente und/oder Klauen der Schaltelemente der Getriebebaueinheit, insbesondere der der Anfahreinheit nachgeordneten Übersetzungsstufen den Gangstufenwechsel nicht bewältigen können oder erheblich belastet werden und verschleißen. Zur Vornahme eines Gangstufenwechsels müssen dabei sowohl die Antriebsmaschine als auch das Turbinenrad 6 der hydrodynamischen Kupplung 3 von der Getriebeeingangswelle, welche vom Eingang E gebildet wird oder mit diesem drehfest gekoppelt ist, abgekoppelt werden. Die Antriebsmaschine ist dabei bei geöffneter Überbrückungskupplung 4 mechanisch abgekoppelt. Die Abkopplung des Turbinenrades 6 der hydrodynamischen Kupplung 3 wird durch den Freilauf F erreicht, der für diese Aufgabe frei laufen muß. Zu diesem Zweck muß die Drehzahl n_{T} des Turbinenrades 6 unter die Drehzahl des Ausganges A abgesenkt werden. Dies erfolgt dabei entweder durch das Absenken der Drehzahl n₁ der Antriebsmaschine, da die Drehzahl des Turbinenrades 6 bei befüllter hydrodynamischer Kupplung 3 durch das Pumpenrad 5 reduziert wird, welches mit einer reduzierten Drehzahl der Antriebsmaschine oder einer entsprechend proportional dazu am Eingang E des Anfahrelementes anliegenden Drehzahl läuft, oder es wird entsprechend einer Ausführung gemäß Figur 2 eine zusätzliche Bremseinrichtung 13 vorgesehen, welche am Turbinenrad 6 wirksam wird und eine Absenkung der Drehzahl n_{T} des Turbinenrades 6 bewirkt.

Bei Vornahme eines Gangstufenwechsels, welcher eine Hochschaltung charakterisiert, ist die Drehzahl am Eingang E nach der Hochschaltung um einen bestimmten Stufensprung verringert. Die Drehzahl des Turbinenrades n_{T} muß in diesem Fall noch unter diese Anschlußdrehzahl, das heißt die Zieldrehzahl der Antriebsmaschine im einzulegenden Gang und damit am Eingang E anliegenden Drehzahl oder einer proportional zu dieser am Eingang E anliegenden Drehzahl abgesenkt werden, damit der Freilauf F frei läuft und der Schaltvorgang ermöglicht werden kann.

Die Figur 2 verdeutlicht eine vorteilhafte Weiterentwicklung einer Ausführung für eine Anfahreinheit 1.2 gemäß Figur 1, wobei für gleiche Elemente die gleichen Bezugszeichen verwendet werden. Bei dieser Ausführung fungiert das hydrodynamische Bauelement 18.2 beim Anfahrvorgang als hydrodynamische Kupplung 3.2 und durch Vertauschen der Funktionen der einzelnen Schaufelräder vom Primärrad 5.2 und Sekundärrad 6.2 als hydrodynamischer Retarder 19.2. Bauteilmäßig ist dazu erfindungsgemäß die zusätzliche Bremseinrichtung 13, welche vorzugsweise als Scheibenbremseinrichtung in Lamellenbauart ausgeführt ist, mit dem Abtrieb 12 des hydrodynamischen Bauelementes vor dem Freilauf F gekoppelt. Die Bremseinrichtung 13 umfaßt dazu mindestens eine erste ortsfeste Scheibe 14, welche vorzugsweise am Gehäuse 15, welches hier nur schematisch angedeutet ist, angeordnet ist und ein zweites Scheibenelement 16, welches wenigstens mittelbar, das heißt entweder direkt oder über weitere zwischengeschaltete Scheibenelemente mit der ortsfesten Scheibe 14 in Wirkverbindung bringbar ist. Das zweite Scheibenelement 16 ist drehfest mit dem Abtrieb 12, insbesondere dem Turbinenrad 6 gekoppelt. Mit dem hydrodynamischen Bauelement 18.2 werden wenigstens zwei Betriebszustände - ein erster Betriebszustand zur Leistungsübertragung, welcher insbesondere während des Anfahrvorganges zum Tragen kommt und die Funktion einer hydrodynamischen Kupplung 3.2 beschreibt und ein zweiter Betriebszustand zur Abbremsung - realisiert. Zur Realisierung der Funktion des hydrodynamischen Retarders 19.2 erfolgt die Zuordnung der Funktion des Statorschaufelrades durch Festsetzung gegenüber den ruhenden Getriebeteilen, insbesondere dem Gehäuse 15 zum Sekundärschaufelrad, das heißt zu dem bei Funktion als hydrodynamische Kupplung 3.2 fungierenden Turbinenrad 6.2. Die Funktion des Rotorschaufelrades wird dabei vom Primärschaufelrad 5.2, welches bei Funktionsweise als hydrodynamische Kupplung 3.2 auch als Pumpenrad fungiert übernommen. Durch den Freilauf F besteht eine optimale Möglichkeit der Festsetzung des Sekundärschaufelrades 6.2 und Abstützung am Gehäuse 15. Des weiteren ermöglicht diese Ausführung die Schaffung einer Multifunktionseinheit zur Realisierung unterschiedlicher Funktionen, das heißt insbesondere des Anfahrvorganges, des verschleißfreien Kuppelvorganges und Bremsvorganges bei Integration in einem Schaltgetriebe.

Die in der Figur 4 angegebene Zustandstabelle verdeutlicht dabei für die Ausführungen gemäß Figur 1 und Figur 2 und entsprechend übertragen auch für die Ausführungen gemäß Figur 3a und 3b beispielhaft die einzelnen Funktionszustände und Schaltvarianten der entsprechenden Elemente der Anfahreinheiten 1, 1.2, 1.3a bzw. 1.3b. In der Leerlaufstellung beziehungsweise zur Einlegung der ersten Gangstufe oder des Rückwärtsganges ist die Überbrückungskupplung 4,4.2, 4.3, 4.3b geöffnet, während das hydrodynamische Bauelement 18, 18.2, 18.3a bzw. 18.3b entleert ist. Über das Primärschaufelrad 5, 5.2, 5.3a, 5.3b wird durch Ankopplung an den Eingang E der Anfahreinheit 1, 1.2, 1.3a, 1.3b ein Ventilationsmoment erzeugt. Die am Sekundärschaufelrad 6, 6.2, 6.3a bzw. 6.3b vorliegende Drehzahl n_{sekundär}, welche der Turbinenraddrehzahl n_{T} des hydrodynamischen Bauelementes 18, 18.2, 18.3a bzw. 18.3b entspricht, entspricht dabei der Eingangsdrehzahl am Eingang der mit der Anfahreinheit 1 gekoppelten Schaltstufen. In diesem Fall wird durch den im torusförmigen Arbeitsraum 7 eingeschlossenen Luftstrom ein sogenanntes Ventilationsmoment durch Umwälzung übertragen.

Der Anfahrvorgang ist durch die Leistungsübertragung über das hydrodynamische Bauelement, insbesondere die Kupplung 3, 3.3a bzw. bei Ausführungen gemäß der Figuren 2 und 3b durch die erste Betriebsweise des hydrodynamischen Bauelementes 18.2 beziehungsweise 18.3b, charakterisiert. In diesem Fall ist die Überbrückungskupplung 4, 4.2, 4.3a, 4.3b geöffnet und die hydrodynamische Kupplung 3, 3.2, 3.3a, 3.3b voll- oder teilbefüllt. Das im torusförmigen Arbeitsraum aufgrund der Primärschaufelradrotation umgewälzte Betriebsmittel überträgt dabei ein Moment auf das Sekundärschaufelrad 6, 6.2, 6.3a beziehungsweise 6.3b. Die Drehzahl des Primärschaufelrades 5, 5.2, 5.3a beziehungsweise 5.3b entspricht unter Berücksichtigung des Schlupfes im wesentlichen dem des Sekundärschaufelrades 6, 6.2, 6.3a beziehungsweise 6.3b, das heißt n_{T} = n₂, die der Drehzahl am Eingang der nachgeordneten Schaltstufe entspricht, d. h. der Drehzahl (n_{A} am) Ausgang A der Anfahreinheit 1.

Während der Betriebsweise Fahren, das heißt im zweiten Betriebszustand, wobei sowohl Zugverkehr als auch Schubverkehr eingeschlossen ist, erfolgt die Leistungsübertragung in der Regel rein mechanisch über die Überbrückungskupplung 4, 4.2, 4.3a beziehungsweise 4.2. Diese ist geschlossen. Das hydrodynamische Bauelement 18, 18.2, 18.3a beziehungsweise 18.3b ist in diesem Zustand an der Leistungsübertragung nicht beteiligt. Dieses kann dabei entweder entleert, teilbefüllt oder völlig gefüllt sein. Dies spielt insbesondere eine Rolle, wenn während des normalen Fahrvorganges, das heißt im Traktionsbetrieb oder Schubbetrieb eine Bremsung mittels dem hydrodynamischen Bauelement, wie bei Ausführung gemäß Figur 2 oder 3b denkbar, vorgenommen werden soll. Dazu wird vorzugsweise das hydrodynamische Bauelement 18.2 beziehungsweise 18.3b völlig entleert, da ansonsten ein Stoß bei Einschaltung der Bremseinrichtung durch das sich schnell aufbauende Bremsmoment entstehen würde. Bei Vorliegen des Signales zur Erzeugung eines gewünschten Bremsmomentes wird die Bremseinrichtung in Form der Turbinenbremse geschlossen und der torusförmige Arbeitsraum entsprechend dem gewünschten Moment mit Betriebsmittel befüllt. Während des Fahrvorganges ist dabei die Drehzahl des Turbinenrades n_{T} kleiner als die der Schaltgetriebeeingangswellendrehzahl. Das als Turbinenrad fungierende Sekundärschaufelrad 6, 6.2, 6.3a beziehungsweise 6.3b läuft frei.

Beim Gangstufenwechsel, welcher eine Hochschaltung charakterisiert, wird die mechanische Kopplung zwischen dem Getriebeeingang, das heißt beispielsweise Eingang E der Anfahreinheit 1, 1.2, 1.3a beziehungsweise 1.3b und dem Ausgang A der Anfahreinheit unterbrochen. Das hydrodynamische Bauelement 18, 18.2, 18.3a beziehungsweise 18.3b ist leer, teilbefüllt oder weist Vollfüllung auf. Die Drehzahl der mit dem Eingang E gekoppelten Antriebsmaschine n₁ wird reduziert und die Drehzahl am Sekundärschaufelrad 6, 6.2, 6.3a beziehungsweise 6.3b ist kleiner als die am Ausgang n_{A} (bzw. n₂ ,d. h. dem Eingang der Schaltstufen). Das Sekundärschaufelrad 6, 6.2, 6.3a bzw. 6.3b läuft frei. Dabei kann bei einer Ausführung gemäß Figur 2 (oder Figur 6.3 beziehungsweise 6.3b) die Bremseinrichtung 13 geöffnet oder zum Abbremsen des Sekundärschaufelrades geschlossen werden.

Bei Gangstufenwechseln, welche eine Rückschaltung in einen niederen Gang charakterisieren, ist die Überbrückungskupplung 4, 4.2, 4.3a, 4.3b beziehungsweise 4.2 geöffnet. Das hydrodynamische Bauelement 18, 18.2, 18.3a beziehungsweise 18.3b in Form der hydrodynamischen Kupplung 3, 3.2, 3.3a, 3.3b kann leer, teilbefüllt oder mit einer Vollfüllung versehen sein. Auch in diesem Fall ist die Drehzahl n_{T} des Sekundärschaufelrades 6, 6.3a, 6.3b, 6.2 kleiner als die Drehzahl am Ausgang n_{A} der Anfahreinheit 1, 1.2. 1.3a beziehungsweise 1.3b. Das Sekundärschaufelrad 6, 6.2, 6.3a bzw. 6.3b ist frei von einer Kopplung mit dem Ausgang A.

Zur Realisierung von Bremsvorgängen wird bei einer Ausführung gemäß Figur 2 und Figur 3b die Bremseinrichtung 13 geschlossen und des weiteren die Überbrückungskupplung 4.2, 4.3b. Das hydrodynamische Bauelement 18.2 bzw. 18.3b muß voll oder zumindest teilbefüllt sein. Durch den Freilauf F läuft das Sekundärschaufelrad 6.2 bzw. 6.3b mit geringerer Drehzahl n_{T} oder Drehzahl Null (stehendes Sekundärschaufelrad) als der Ausgang A der Anfahreinheit 1.2 bzw. 1.3b um.

Bei den einzelnen Schaltvorgängen Hochschaltung oder Rückschaltung sind verschiedene Schaltstufenkombinationen, bei den dargestellten Ausführungen alle theoretisch möglichen Kombinationen möglich. Das heißt, es kann von einem ersten Ausgangsgang in entweder eine nächsthöhere oder nächstniedere Gangstufe geschaltet werden oder aber unter Überspringen einer oder mehrerer Gangstufen in einen höheren oder niederen Gang.

Die Figuren 3a und 3b verdeutlichen Ausführungen gemäß den Figuren 1 und 2, wobei jedoch die räumliche Anordnung in axialer Richtung betrachtet vom Eingang E zum Ausgang A der Anfahreinheit 1.3a beziehungsweise 1.3b der einzelnen Schaufelräuder - Primärschaufelrad 5.3a beziehungsweise 5.3b und Sekundärschaufelrad 6.3a beziehungsweise 6.3b der hydrodynamischen Bauelemente 18.3a, 18.3b derart erfolgt, daß das Primärschaufelrad 5.3a beziehungsweise 5.3b zwischen der Überbrückungskupplung 4.3a beziehungsweise 4.3b und dem Sekundärschaufelrad 6.3a beziehungsweise 6.3b angeordnet ist.

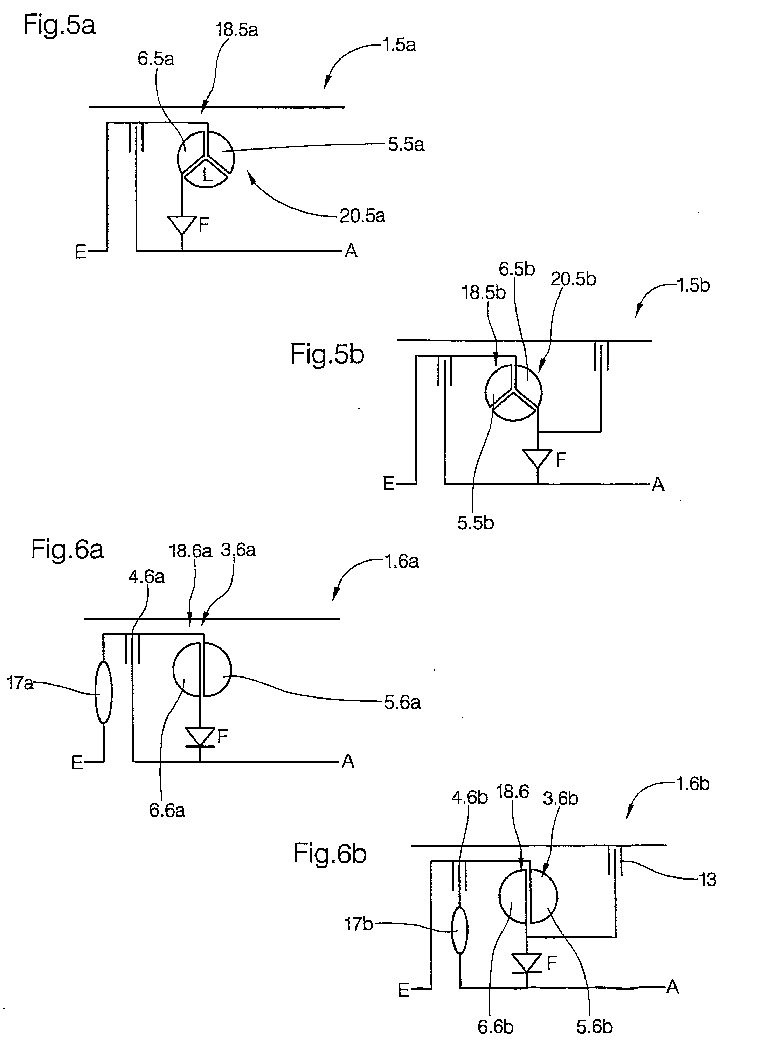

Die Figuren 5a und 5b verdeutlichen eine Ausführung mit hydrodynamischem Bauelement 18.5a und 18.5b in Form eines hydrodynamischen Drehzahl-/Drehmomentwandlers 20.5a bzw. 20.5b. Der Grundaufbau der Anfahreinheiten 1.5a und 1.5b entspricht denen in den Figuren 1 und 2 beschriebenen, lediglich das hydrodynamische Bauelement 18ist durch einen hydrodynamischen Drehzahl/Drehmomentwandler 20.5a, 20.5b ersetzt worden. Für gleiche Elemente werden daher gleiche Bezugszeichen verwendet. Die dargestellten Ausführugen verdeutlichen Beispiele. Denkbar sind auch Ausführungen mit anderer räumlicher Anordnung der einzelnen Elemente des Wandlers bezogen auf die räumliche Lage der Überbrückungskupplung.

Die Figuren 6a und 6b verdeutlichen anhand von Ausführungen erfindungsgemäß gestalteter Anfahreinheiten 1.6a und 1.6b gemäß den Figuren 1 oder 2 die Integration einer weiteren Komponente in Form einer Einrichtung zur Schwingungsdämpfung 17a bzw. 17b, vorzugsweise einen Torsionsschwingungsdämpfer. Diese ist funktional entweder der Antriebsseite, das heißt dem Eingang E der Anfahreinheit 1.6a wie in der Figur 6a dargestellt, zugeordnet, wobei diese Ausführung besonders vorteilhaft ist. Eine andere Möglichkeit besteht gemäß der Darstellung in Figur 6b darin, die Einrichtung zur Schwingungsdämpfung 17b funktional der Abtriebseite, das heißt dem Ausgang A der Anfahreinheit 1.6b zuzuordnen, wobei bezüglich der räumlichen Anordnung zwischen der Anordnung der Einrichtung zur Schwingungsdämpfung 17b in Einbaulage betrachtet
a) räumlich vor der hydrodynamischen Kupplung 3.6a und vor der Überbrückungskupplung 4.6a oder
b) räumlich vor der hydrodynamischen Kupplung 3.6b und hinter der Überbrückungskupplung 4.6b oder
c) räumlich hinter der hydrodynamischen Kupplung 3.6 unterschieden werden kann. Der unter a) genannte Fall ist in Figur 6a dargestellt, der unter b) genannte Fall in Figur 6b.

Die in Figuren 1 bis 6 dargestellten Anordungsmöglichkeiten sind Beispiele.

### Bezugszeichenliste

- 1, 1.2, 1.3a, 1.3b, 1.5a, 1.5b, 1.6a, 1.6b,: Anfahreinheit
- 2, 2.2, 2.3a, 2.3b, 2, 2.2, 2.3a, 2.3b, 2.5a, 2.5b, 2.6a, 2.6b,: Anfahrelement
- 3, 3.2, 3.3a, 3.3b, 3.5a, 3.5b, 3.6a 3.6b: hydrodynamische Kupplung
- 4, 4.2, 4.3a, 4.3b, 4.5a, 4.5b, 4.6a, 4.6b: Überbrückungskupplung
- 5, 5.2, 5.3a, 5.3b, 5.5a, 5.5b: Primärschaufelrad
- 6, 6.2, 6.3a, 6.3b, 6.5a, 6.5b: Sekundärschaufelrad
- 7: torusförmiger Arbeitsraum
- 8 9: Kupplungseingangsscheibe
- 10: Kupplungsausgangsscheibe
- 11: Antrieb der hydrodynamischen Kupplung
- 12: Abtrieb der hydrodynamischen Kupplung
- 13: Bremseinrichtung
- 14: ortsfeste Scheibe
- 15: Gehäuse
- 16: Scheibenelemente
- 17a, 17b: Einrichtung zur Schwingungsdämpfung
- 18, 18.2, 18.3a, 18.3b, 18.5a, 18.5b, 18.6a, 18.6b: hydrodynamisches Bauelement
- 19.2, 19.3b: hydrodynamischer Retarder
- 20.5a, 20.5b: hydrodynamischer Drehzahl/Drehmomentwandler
- A: Ausgang
- E: Eingang
- F: Freilauf
- n_{A}: Drehzahl am Ausgang
- n₂: Drehzahl am Eingang einer der Anfahreinheit nachgeschalten Schaltstufe
- n₁: Drehzahl der Antriebsmaschine
- n_{T}: Drehzahl des Turbinenrades

## Patentansprüche

1. Automatisiertes Schaltgetriebe
1.1 mit einem Getriebeeingang und einem Getriebeausgang;
1.2 mit einer zwischen Getriebeeingang und Getriebeausgang angeordneten Anfahreinheit (1.3a; 1.3b;1.5a; 1.5b; 1.6a; 1.6b) mit den folgenden Merkmalen:
1.3 mit einem Eingang (E) und einem Ausgang (A);
1.4 mit einem Anfahrelement (2; 2.2; 2.3a; 2.3b; 2.5a; 2.5b; 2.6a; 2.6b) in Form eines zumindest teilbefüllbaren hydrodynamischen Bauelementes (18; 18.2; 18.3a; 18.3b; 18.5a; 18.5b; 18.6a; 18.6b), umfassend einen mit dem Eingang (E) drehfest koppelbaren Antrieb (11) und mit dem Ausgang (A) koppelbaren Abtrieb (12) und ein Primärrad (5; 5.2; 5.3a; 5.3b; 5.5a;5.5b; 5.6a; 5.6b) und ein Sekundärrad (6; 6.2; 6.3a; 6.3b; 6.5a; 6.5b; 6.6a; 6.6b);
**gekennzeichnet durch** die weiteren Merkmale :
1.5 zwischen dem Abtrieb (12) des Anfahrelementes (2; 2.2; 2.3a; 2.3b; 2.5a; 2.5b; 2.6a; 2.6b) und dem Ausgang (A) ist ein Freilauf (F) angeordnet;
1.6 mit einer Einrichtung (13) zur ortsfesten Abstützung und Abbremsung des Sekundärrades (6.2; 6.3b; 6.5b; 6.6b) an einem Gehäuse (15), welche mit dem Sekundärschaufelrad vor dem Freilauf gekoppelt ist, wobei der torusförmige Arbeitsraum des hydrodynamischen Bauelementes entsprechend des gewünschten Momentes mit Betriebsmittel befüllbar ist;
1.7 das automatische Schaltgetriebe ist frei von einer zusätzlichen Trennkupplung zur Leistungsunterbrechung.

2. Automatisiertes Schaltgetriebe nach Anspruch 1, **gekennzeichnet durch** die folgenden Merkmale:
2.1 die Anfahreinheit (1; 1.2; 1.3a; 1.3b; 1.5a; 1.5b; 1.6a; 1.6b umfaßt eine Überbrückungskupplung (4; 4.2; 4.3a; 4.3b; 4.5a; 4.5b; 4.6a; 4.6b)
2.2 das hydrodynamische Bauelement (18; 18.2; 18.3a; 18.3b; 18.5a; 18.5b; 18.6a; 18.6b) und die Überbrückungskupplung (4; 4.2; 4.3a; 4.3b; 4.5a; 4.5b; 4.6a; 4.6b) sind parallel geschattet;
2.3 die Überbrückungskupplung (4; 4.2; 4.3a; 4.3b; 4.5a; 4.5b; 4.6a; 4.6b) ist zwischen dem Eingang (E) und dem Ausgang (A) angeordnet.

3. Automatisiertes Schaltgetriebe, **gekennzeichnet durch** die folgenden Merkmale:
3.1 die Anfahreinheit (1; 1.2; 1.3a; 1.3b; 1.5a; 1.5b; 1.6a) umfaßt eine Einrichtung zur Schwingungsdämpfung (17a);
3.2 die Einrichtung zur Schwingungsdämpfung (17a) ist räumlich und funktional vor der Überbrückungskupplung (4; 4.2; 4.3a; 4.3b; 4.5a; 4.5b; 4.6a) angeordnet.

4. Automatisiertes Schaltgetriebe, **gekennzeichnet durch** die folgenden Merkmale:
4.1 mit einer Einrichtung zur Schwingungsdämpfung (17b);
4.2 die Einrichtung zur Schwingungsdämpfung (17b) ist funktional hinter der Überbrückungskupplung (4; 4.2; 4.3a; 4.3b; 4.5a; 4.5b; 4.6b) angeordnet.

5. Automatisiertes Schaltgetriebe nach einem der Ansprüche 1 bis 4 **dadurch gekennzeichnet, daß** das Primärrad (5.3a; 5.3b) räumlich in axialer Richtung vom Eingang (E) zum Ausgang (A) zwischen der Überbrückungskupplung (4.3a; 4.3b;) und dem Sekundärrad (6.3a; 6.3b)) angeordnet ist.

6. Automatisiertes Schaltgetriebe nach einem der Ansprüche 1 bis 4 **dadurch gekennzeichnet, dass** das Sekundärrad (6; 6.2; 6.5a; 6.5b; 6.6a; 6.6b) räumlich in axialer Richtung vom Eingang (E) zum Ausgang (A) zwischen der Überbrückungskupplung (4; 4.2; 4.5a; 4.5b; 4.6a; 4.6b) und dem Primärrad (5; 5.2; 5.5a; 5.5b; 5.6a; 5.6b) angeordnet ist.

7. Automatisiertes Schaltgetriebe nach einem der Ansprüche 1 bis 6, **dadurch gekennzeichnet, dass** die Einrichtung (13) zum Abbremsen am Abtrieb des hydrodynamischen Bauelementes, als Reibbremseinrichtung, umfassend mindestens ein am Gehäuse (15) ortsfest angeordnetes reibflächentragendes Element und ein zweites, mit dem Abtrieb (12) des hydrodynamischen Bauelementes (18.2; 18.3b; 18.5b; 18.6b) drehfest gekoppeltes reibflächentragendes Element, ausgeführt ist.

8. Fahrzeug mit einem Schaltgetriebe nach einem der Ansprüche 1 bis 7.

## Claims

1. An automatic transmission;
1.1 with a gear input and a gear output;
1.2 with a starting unit (1.3a; 1.3b; 1.5a; 1.5b; 1.6a; 1.6b) arranged between the gear input and the gear output, having the following features:
1.3 with an input (E) and an output (A);
1.4 with a starting element (2; 2.2; 2.3a; 2.3b; 2.5a; 2.5b; 2.6a; 2.6b) in the form of an at least partly fillable hydrodynamic component (18; 18.2; 18.3a; 18.3b; 18.5a; 18.5b; 18.6a; 18.6b), comprising a drive (11) which can be coupled in a torsionally rigid manner with the input (E) and a power take-off (12) which can be coupled with the output (A), and a primary wheel (5; 5.2; 5.3a; 5.3b; 5.5a; 5.5b; 5.6a; 5.6b) and a secondary wheel (6; 6.2; 6.3a; 6.3b; 6.5a; 6.5b; 6.6a; 6.6b), **characterized by** the further features:
1.5 a free-wheel (F) is arranged between the power take-off (12) of the starting element (2; 2.2; 2.3a; 2.3b; 2.5a; 2.5b; 2.6a; 2.6b) and the output (A);
1.6 with a device (13) for stationary support and braking of the secondary wheel (6.2; 6.3b; 6.5b; 6.6b) on a housing (15) which is coupled with the secondary blade wheel before the free-wheel, with the toroid working chamber of the hydrodynamic component being fillable with operating material according to the desired moment;
1.7 the automatic transmission is free from an additional separating clutch for interrupting the power.

2. An automatic transmission as claimed in claim 1, **characterized by** the following features:
2.1 the starting unit (1; 1.2; 1.3a; 1.3b; 1.5a; 1.5b; 1.6a; 1.6b) comprises a lock-up clutch (4; 4.2; 4.3a; 4.3b; 4.5a; 4.5b; 4.6a; 4.6b);
2.2 the hydrodynamic component (18; 18.2; 18.3a; 18.3b; 18.5a; 18.5b; 18.6a; 18.6b) and the lock-up clutch (4; 4.2; 4.3a; 4.3b; 4.5a; 4.5b; 4.6a; 4.6b) are switched in parallel;
2.3 the lock-up clutch (4; 4.2; 4.3a; 4.3b; 4.5a; 4.5b; 4.6a; 4.6b) is arranged between the input (E) and the output (A).

3. An automatic transmission, **characterized by** the following features:
3.1 the starting unit (1; 1.2; 1.3a; 1.3b; 1.5a; 1.5b; 1.6a; 1.6b) comprises a device for vibration damping (17a);
3.2 the device for vibration damping (17a) is arranged spatially and functionally before the lock-up clutch (4; 4.2; 4.3a; 4.3b; 4.5a; 4.5b; 4.6a).

4. An automatic transmission, **characterized by** the following features:
4.1 with a device for vibration damping (17b);
4.2 the device for vibration damping (17b) is arranged functionally behind the lock-up clutch (4; 4.2; 4.3a; 4.3b; 4.5a; 4.5b; 4.6b).

5. An automatic transmission as claimed in one of the claims 1 to 4, **characterized in that** the primary wheel (5.3a, 5.3b) is arranged spatially in the axial direction from the input (E) to the output (A) between the lock-up clutch (4.3a; 4.3b) and the secondary wheel (6.3a; 6.3b).

6. An automatic transmission as claimed in one of the claims 1 to 4, **characterized in that** the secondary wheel (6; 6.2; 6.5a; 6.5b; 6.6a; 6.6b) is arranged spatially in the axial direction from the input (E) to the output (A) between the lock-up clutch (4; 4.2; 4.5a; 4.5b; 4.6a; 4.6b) and the primary wheel (5; 5.2; 5.5a; 5.5b; 5.6a; 5.6b).

7. An automatic transmission as claimed in one of the claims 1 to 6, **characterized in that** the device (13) for braking is configured on the power take-off of the hydrodynamic component as a frictional braking device, comprising at least one element which carries a frictional surface and is arranged in a stationary manner on the housing (15) and an element which carries a frictional surface and is torsionally rigidly coupled with the power take-off (12) of the hydrodynamic component (18.2; 18.3b; 18.5b; 18.6b).

8. A vehicle with a transmission as claimed in one of the claims 1 to 7.

## Revendications

1. Boîte de vitesses automatisée
1.1 avec une entrée de boîte de vitesses et une sortie de boîte de vitesses;
1.2 avec une unité de démarrage (1.3a; 1.3b; 1.5a; 1.5b; 1.6a; 1.6b) disposée entre l'entrée de boîte de vitesses et la sortie de boîte de vitesses et ayant les caractéristiques suivantes:
1.3 comporte une entrée (E) et une sortie (A);
1.4 comporte un élément de démarrage (2; 2.2; 2.3a; 2.3b; 2.5a; 2.5b; 2.6a; 2.6b) sous forme d'un élément hydrodynamique (18; 18.2; 18.3a; 18.3b; 18.5a; 18.5b; 18.6a; 18.6b) adapté pour être rempli du moins en partie et comprenant un groupe moteur (11) adapté pour être couplé en rotation avec l'entrée (E) et un groupe mené (12) adapté pour être couplé à la sortie (A) ainsi qu'une roue primaire (5; 5.2; 5.3a; 5.3b; 5.5a; 5.5b; 5.6a; 5.6b) et une roue secondaire (6; 6.2; 6.3a; 6.3b; 6.5a; 6.5b; 6.6a; 6.6b); **caractérisé par** les particularités suivantes:
1.5 entre le groupe mené (12) de l'élément de démarrage (2; 2.2; 2.3a; 2.3b; 2.5a; 2.5b; 2.6a; 2.6b) et la sortie (A) est disposée une roue libre (F);
1.6 comporte un mécanisme (13) permettant l'appui fixe et le freinage de la roue secondaire (6.2; 6.3b; 6.5b; 6.6b), ledit mécanisme étant monté sur un boîtier (15) et couplé, en amont de la roue libre, à la roue à aubes secondaire, l'enceinte de travail en forme de tore de l'élément hydrodynamique étant adaptée pour être remplie de fluide de travail en fonction du couple désiré;
1.7 la boîte de vitesses automatique ne comporte pas de moyens débrayeurs supplémentaires pour interrompre le fonctionnement.

2. Boîte de vitesses automatisée selon la revendication 1, **caractérisée par** les particularités suivantes:
2.1 l'unité de démarrage (1; 1.2; 1.3a; 1.3b; 1.5a; 1.5b; 1.6a; 1.6b) comprend un embrayage de pontage (4; 4.2; 4.3a; 4.3b; 4.5a; 4.5b; 4.6a; 4.6b)
2.2 l'élément hydrodynamique (18; 18.2; 18.3a; 18.3b; 18.5a; 18.5b; 18.6a; 18.6b) et l'embrayage de pontage (4; 4.2; 4.3a; 4.3b; 4.5a; 4.5b; 4.6a; 4.6b) sont montés en parallèle;
2.3 l'embrayage de pontage (4; 4.2; 4.3a; 4.3b; 4.5a; 4.5b; 4.6a; 4.6b) est disposé entre l'entrée (E) et la sortie (A).

3. Boîte de vitesses automatisée **caractérisée par** les particularités suivantes:
3.1 l'unité de démarrage (1; 1.2; 1.3a; 1.3b; 1.5a; 1.5b; 1.6a) comprend un organe (17a) destiné à réduire les vibrations;
3.2 l'organe (17a) destiné à réduire les vibrations est monté devant l'embrayage de pontage (4; 4.2; 4.3a; 4.3b; 4.5a; 4.5b; 4.6a) en termes de localisation dans l'espace comme en termes de fonctionnalité.

4. Boîte de vitesses automatisée **caractérisée par** les particularités suivantes:
4.1 comporte un organe (17b) destiné à réduire les vibrations;
4.2 l'organe (17b) destiné à réduire les vibrations est monté derrière l' embrayage de pontage (4; 4.2; 4.3a; 4.3b; 4.5a; 4.5b; 4.6b) en termes de fonctionnalité.

5. Boîte de vitesses automatisée selon l'une quelconque des revendications 1 à 4, **caractérisée en ce que** la roue primaire (5.3a; 5.3b) est disposée, en termes de localisation dans l'espace et suivant la direction axiale depuis l'entrée (E) vers la sortie (A), entre l'embrayage de pontage (4.3a; 4.3b) et la roue secondaire (6.3a; 6.3b).

6. Boîte de vitesses automatisée selon l'une quelconque des revendications 1 à 4, **caractérisée en ce que** la roue secondaire (6; 6.2; 6.5a; 6.5b; 6.6a; 6.6b) est disposée, en termes de localisation dans l'espace et suivant la direction axiale depuis l'entrée (E) vers la sortie (A), entre l'embrayage de pontage (4; 4.2; 4.5a; 4.5b; 4.6a; 4.6b) et la roue primaire (5; 5.2; 5.5a; 5.5b; 5.6a; 5.6b).

7. Boîte de vitesses automatisée selon l'une quelconque des revendications 1 à 6, **caractérisée en ce que** le mécanisme (13) de freinage prévu sur le groupe mené de l'élément hydrodynamique est conformé en forme d'organe de freinage par frottement comprenant au moins un élément portant des surfaces de frottement fixé au boîtier (15) et un deuxième élément portant des surfaces de frottement couplé en rotation avec le groupe mené (12) de l'élément hydrodynamique (18.2; 18.3b; 18.5b; 18.6b).

8. Véhicule équipé d'une boîte de vitesses selon l'une quelconque des revendications 1 à 7.
